# EUROPÄISCHE PATENTSCHRIFT

(11) **EP 4 315 307 B1**
(45) Veröffentlichungstag und Bekanntmachung des Hinweises auf die Patenterteilung: **03.07.2024**
(21) Anmeldenummer: 22706859.0
(22) Anmeldetag: 22.02.2022
(51) Int. Cl.: G09F 13/04, G09F 13/14, G09F 13/16

(54) **REFLEKTORVORRICHTUNG, VERFAHREN ZUM HERSTELLEN EINER REFLEKTORVORRICHTUNG, UND KRAFTFAHRZEUG MIT EINER REFLEKTORVORRICHTUNG**
REFLECTOR DEVICE, METHOD FOR PRODUCING A REFLECTOR DEVICE, AND MOTOR VEHICLE COMPRISING A REFLECTOR DEVICE
DISPOSITIF RÉFLECTEUR, PROCÉDÉ DE FABRICATION D'UN DISPOSITIF RÉFLECTEUR ET VÉHICULE AUTOMOBILE ÉQUIPÉ D'UN DISPOSITIF RÉFLECTEUR

(30) Priorität: 31.03.2021 DE 102021108140
(43) Veröffentlichungstag der Anmeldung: 07.02.2024
(73) Patentinhaber: Audi AG, 85045 Ingolstadt (DE)
(72) Erfinder: GEORGI, André, 85386 Eching (DE); PRADEL, Michael, 85077 Manching (DE)
(74) Vertreter: Hofstetter, Schurack & Partner
(86) Internationale Anmeldenummer: PCT/EP2022/054295
(87) Internationale Veröffentlichungsnummer: WO 2022/207187

(56) Entgegenhaltungen:
- DE-A1-102004 062 919
- DE-A1-102014 211 789
- JP-A- S5 151 296
- JP-A- 2002 055 215

## Beschreibung

Die Erfindung betrifft eine Reflektorvorrichtung, ein Verfahren zum Herstellen einer Reflektorvorrichtung, und ein Kraftfahrzeug mit einer Reflektorvorrichtung.

Unter einer Reflektorvorrichtung wird ein Bauteil oder Baugruppe verstanden, welches/welche Licht reflektiert. Das Element des Bauteils oder der Bauteilgruppe, der dazu ausgelegt ist, das Licht zu reflektieren, wird dabei als Reflektorelement bezeichnet. Die Oberfläche des Reflektorelements, die das Licht reflektiert, wird dabei im Folgenden als Reflexions-Oberfläche bezeichnet.

Reflektoren von Kraftfahrzeugen sind häufig an deren Rückseite angeordnet, um zum Beispiel Scheinwerferlicht nachfolgender Fahrzeuge so zu reflektieren, dass es von deren Fahrern gesehen werden kann. Dadurch kann die Gefahr von Auffahrunfällen reduziert werden.

Die US 7,011,418 B2 beschreibt eine retroreflektierende Abdeckfolie oder Band, die/das für die Seiten von Lastzügen geeignet ist und alternierende rote und weiße Farben umfasst, die über maßgefertigte Flächen der Abdeckfolie oder des Bandes an vorbestimmten Stellen und Längen separiert. Ein solches Band oder Abdeckfolie ist sehr aufwendig in der Herstellung.

Die DE 20 2018 006 359 U1 beschreibt ein Kraftfahrzeug mit einer Frontscheibe, einer Heckscheibe und mindestens zwei Seitenscheiben mit wenigstens einem an der Außenfläche des Kraftfahrzeugs angeordneten Element, welches insbesondere auf einem von der Gegenfahrbahn befindlichen entgegenkommenden und/oder von einem dem Kraftfahrzeug nachfolgenden weiteren Fahrzeug eingesehen werden kann, wobei an dem Element wenigstens ein Retroreflektorelement mit einer Vielzahl reflektierender Mikroprismen angeordnet ist.

Die EP 0 004 976 B1 bezieht sich auf einen Universal-Warnstreifen, der vorwiegend zur Anbringung an der Rückseite von Festlandfahrzeugen, im besonderen an für den Straßenverkehr bestimmten Fahrzeugen, bestimmt ist.

Aus der DE 20 2009 013 886 U1 sind Außenverkleidungsteile und Dichtungsanordnungen für Fenster, Türen und Dächer sowie Deckel für Fahrzeuge bekannt, die aus einer Oberfläche beschaffen sind, wobei das Oberflächenmaterial reflektierende oder retroreflektierende Eigenschaften aufweist.

Die US 2003/0142505 A1 beschreibt eine Kraftfahrzeug-Licht-Anordnung umfassend einen Reflektor, der Blenden hat, die in seiner umlaufenden Wand geformt sind, die dazu konfiguriert sind, Licht-emittierende Dioden in einer generell zu der umlaufenden Wand senkrechten Orientierung anzunehmen.

Die DE 10 2004 062 919 A1 betrifft Rückstrahler für Fahrzeuge, vorzugsweise Heckleuchten, mit Rückstrahlelementen, die hinter einer Lichtscheibe liegen. Die JP 2002 055 215 A zeigt eine retroreflektierende Folie mittels Glasperlen. Die JPS 515 1296 A offenbart dünnes Reflektorelement.

Ist eine reflektierende Folie einfach auf die Karosserie aufgeklebt, ist die Folie nicht gegen äußere Einflüsse, zum Beispiel die Witterung, geschützt, und kann zum Beispiel von vorübergehenden Passanten abgerissen werden. Eine solche Folie wird in der Regel durch Regen, Erosion und Fahrtwind, externe mechanische Kräfte, also zum Beispiel Fußgänger, die an der Folie ziehen, oder bei der Autowäsche beschädigt und bleiben, nicht dauerhaft mechanisch positioniert, und können sogar ihre reflektierende Kraft verlieren. Das Aufkleben einer reflektierenden Folie ist außerdem kaum serientauglich, da die Folie von Hand positioniert und aufgeklebt werden muss. Soll die Folie repositioniert werden oder etwas anderes aufgeklebt werden, so können Spuren oder eventuell Schäden am Lack verbleiben, beziehungsweise der Kleber trocknen und die Folie nach einem Repositionieren schneller abblättern. Außerdem ist eher nachteilhaft, dass ein starker Kleber die Wahrscheinlichkeit eines Verrutschens der Folie reduziert, jedoch einen größeren Einfluss auf den Lack haben kann, insbesondere wenn die Folie wieder abgezogen wird. Ein weniger starker Kleber hingegen kann unter Umständen leicht von Regen aufgeweicht werden, so dass die Folie verrutscht oder sogar ganz abblättert.

Alternativ zu reflektierenden Folien kann zum Beispiel ein Bereich des Kraftfahrzeugs nachts mit LEDs beleuchtet werden, insbesondere mit LEDs von innen, um zum Beispiel die Erkennbarkeit eines Warnzeichens am Kraftfahrzeug zu erhöhen. Nachteilig ist hierbei jedoch, dass dies sehr kostenintensiv ist und dass LEDs irgendwann ausfallen können, so dass zum Beispiel eine Kennzeichnung für ein Polizeiauto oder für einen Krankenwagen nicht komplett strahlt. Weitere Nachteile sind der Energieverbrauch der LEDs und das hohe Erfordernis an Bauraum. Eine solche Beleuchtung kann nach einem kleinen Aufprall mit nur kleinem Schaden trotzdem komplett ausfallen. Ist das Fahrzeug geparkt und ausgeschaltet, wird der Bereich entweder nicht beleuchtet oder die Batterie des Kraftfahrzeugs wird belastet. In manchen Ländern ist eine aktive Beleuchtung mittels Lampen auch unter Umständen nicht erlaubt.

Eine der Erfindung zugrunde liegende Aufgabe ist ein besonders effizientes Hervorheben eines Bereichs eines Kraftfahrzeugs durch Licht.

Die Aufgabe wird durch die erfindungsgemäßen Vorrichtungen und das erfindungsgemäße Verfahren gemäß der unabhängigen Ansprüche gelöst. Vorteilhafte Weiterbildungen sind durch die Unteransprüche gegeben.

Die Erfindung basiert auf der Idee, anstatt einer aktiven Beleuchtung ein Reflektorelement zu benutzen und dieses in ein als abgedeckte Schale oder Behälter ausgestaltetes Bauteil (oder Bauteilgruppe) zu integrieren. Die Schale oder der Behälter können an eine gewünschte Stelle, zum Beispiel ein Exterieur des Kraftfahrzeugs, aufgeklebt oder angeklipst werden.

Das Reflektorelement ist in einer Schale gelagert und wird durch eine zumindest teilweise transparente Abdeckung in Form eines Abdeckelements von äußeren Einflüssen abgeschirmt. Dabei ist das Abdeckelement, das zum Beispiel als Abdeckblende ausgestaltet sein kann, vorzugsweise vollständig transparent oder im Wesentlichen oder größtenteils transparent, so dass das Reflektorelement, welches die Form eines gewünschten Logos, Symbols oder Schriftzugs oder einer gewünschten Symbolfolge hat, von außen sichtbar ist. Tagsüber ist das Reflektorelement, das zum Beispiel eine Buchstabenfolge oder ein Symbol formen kann, gut sichtbar und reflektiert nachts, wenn Licht auf das Reflektorelement fällt, leuchtend zurück. Das die Reflexion formgebende Reflektorelement ist somit sowohl tags als auch nachts sichtbar, das heißt, das beispielhafte Symbol ist sowohl in seiner Tag- als auch Nachterscheinung immer gleich. Vorzugsweise kann die Form des Reflektorelements, also deren Zuschnitt, auch für die abgedeckte Schale oder den Behälter formgebend sein.

Das Reflektorelement in seiner vorgegebenen Form, also in einem Zuschnitt als zum Beispiel Symbol, zum Beispiel als Warnsymbol, ist tagsüber und nachts gut sichtbar, wobei sich die Nachtsichtbarkeit dadurch ergibt, dass es zum Beispiel vom Verkehr, also zum Beispiel von anderen Verkehrsteilnehmern, angestrahlt wird und das Scheinwerferlicht reflektiert. Nachts ist das beispielhafte Symbol aufgrund der Lage des Reflektorelements in der Vertiefung oder Mulde von einem Passanten nicht oder nicht so gut zu sehen, jedoch von zum Beispiel Autofahrern oder Radfahrern, da das Licht der Scheinwerfer der anderen (Kraft-)Fahrzeuge reflektiert wird. Im Vergleich zu einer aktiven Beleuchtung durch zum Beispiel LEDs ist es sehr günstig und braucht deutlich weniger Bauraum. Es fällt also kein zusätzlicher Energieverbrauch an. Die Reflexion ist nicht anfällig und fällt auch nicht aus. Zum Beispiel Regen oder Schmutz fallen nicht direkt auf das Reflektorelement, und das Abdeckelement sowie das Schalenelement können leicht gereinigt werden. Mit anderen Worten erfüllt das Abdeckelement die Funktion als Schutzschicht.

Auch nach einem kleinen Aufprall funktioniert das Reflektorelement. Das Reflektorelement ist auch dann sichtbar, wenn das Kraftfahrzeug geparkt ist. Die erfindungsgemäße Lösung ist außerdem sehr gut serientauglich, da die Reflektorvorrichtung im Gegensatz zu einer Reflektorfolie nicht zwangsläufig von Hand aufgeklebt werden muss. Ein weiterer Positionierungsvorteil ist, dass die Positionierung sehr langlebig ist.

Die Reflektorvorrichtung ist durch ein Spritzgußverfahren hergestellt, durch Hinterspritzen oder Umspritzen des Reflektorelements in einem EinKomponenten-Spritzgussverfahren oder, vorzugsweise, in einem ZweiKomponenten-Spritzgussverfahren. Durch das Spritzgießen sind Abdeckelement und Schalenelement dicht aufeinander befestigt, so dass zum Beispiel kein Wasser in das Schalen-Innere eintreten kann. Die Reflektorvorrichtung weist dann keinen Spalt auf, und ist dadurch besonders dicht umhüllt. Das Reflektorelement ist damit besser vor Erosion geschützt.

Die erfindungsgemäße Reflektorvorrichtung ist vorzugsweise für ein Kraftfahrzeug, vorzugsweise zum Anordnen an einem Exterieur des Kraftfahrzeugs, also zum Beispiel an einer Karosserie, zum Beispiel an einer Tür, oder an einem Kühlergrill. Alternativ kann die Reflektorvorrichtung zum Beispiel als Schild verwendet werden. Die besonderen Vorteile der Serientauglichkeit kommen jedoch vor allem bei einer erfindungsgemäßen Reflektorvorrichtung für ein Kraftfahrzeug zu tragen, denn es wird auch die Serientauglichkeit des entsprechenden Kraftfahrzeugs verbessert.

Die erfindungsgemäße Reflektorvorrichtung weist ein Reflektorelement mit einer Reflexions-Oberfläche auf, welche dazu ausgestaltet ist, auf die Reflexions-Oberfläche einfallende Lichtwellen zu reflektieren. Das Reflektorelement hat eine vorgegebene Form. Die vorgegebene Form beschreibt dabei zum Beispiel das Logo, den Schriftzug, einen Buchstaben, ein Symbol oder eine Symbolreihenfolge, und ist damit formgebend für die Reflexion. Das Reflektorelement hat eine der Reflexions-Oberfläche gegenüberliegende Rückseite und ist flächig ausgestaltet, zum Beispiel als Band oder Platine.

Die Reflexions-Oberfläche des Reflektorelements lenkt die einfallenden Lichtwellen in die Einfallsrichtung der Lichtwellen zurück. Mit anderen Worten ist das Reflektorelement ein retroreflektierendes Reflektorelement. Im Gegensatz zu zum Beispiel einem Spiegel leuchtet das retroreflektierende Reflektorelement sehr viel heller. Das Licht wird zurückgeworfen, egal aus welcher Richtung das Licht kommt. Bei einem solchen Reflektorelement kann die Reflexions-Oberfläche zum Beispiel Glasperlen und/oder Glaspulver und/oder Mikroprismen aufweisen. Die Reflektorwirkung ist sehr viel intensiver, also sehr viel heller, was insbesondere bei der Anbringung der Reflektorvorrichtung an der Außenseite des Kraftfahrzeugs die oben genannten Vorteile deutlich verstärkt.

Das Reflektorelement ist als retroreflektierende Folie ausgestaltet. Die Reflektorvorrichtung kann so sehr flach und leicht gebaut werden, und in der Kombination mit der retro-reflektierenden Eigenschaft kann sehr effizient und kompakt ein sehr heller Reflektor bereitgestellt werden.

Die Reflektorvorrichtung umfasst ein Schalenelement, das eine Vertiefung oder Mulde aufweist, die das Reflektorelement aufnimmt. Mit anderen Worten hat die Vertiefung oder die Mulde eine Form, in die das Reflektorelement passt, die das Reflektorelement also aufnimmt. Das Logo, das Symbol oder die Symbolfolge oder der Schriftzug des Reflektorelements wird dann auch tagsüber noch einmal deutlicher hervorgehoben.

Dadurch kann das Schalenelement, das zum Beispiel opak sein kann, das Reflektorelement auch ohne Kleben sehr gut positionieren. Das Schalenelement kann der ganzen Reflektorvorrichtung eine charakteristische Form geben, nämlich zum Beispiel die Form der beispielhaften Symbolfolge, falls nicht nur die Vertiefung oder Mulde die Form des Zuschnitts des Reflektorelements hat, sondern das ganze Schalenelement.

Das Reflektorelement ist in der Vertiefung oder Mulde derart gelagert, dass die Reflexions-Oberfläche von der Vertiefung abgewandt ist. Die Rückseite des Reflektorelements ist dann also der Vertiefung zugewandt. Liegt das Reflektorelement also in der Vertiefung oder Mulde des Schalenelements, so ist die Reflexions-Oberfläche weiterhin sichtbar.

Die Reflektorvorrichtung umfasst ein Abdeckelement mit einem transparenten Anteil, durch den Reflexions-Oberfläche des Reflektorelements sichtbar ist. Dabei sind das Abdeckelement und das Schalenelement derart aneinander angeordnet, dass sie einen abgedeckten Behälter oder eine abgedeckte Schale für das in der Vertiefung oder Mulde gelagerte Reflektorelement bilden.

Der transparente Anteil des Abdeckelements hat vorzugsweise die Form des Reflektorelements oder gibt die Sicht auf die Reflexions-Oberfläche des Reflektorelements vollständig frei. Mit anderen Worten kann idealerweise das gesamte Logo oder Symbol, die gesamte Symbolfolge oder der gesamte Schriftzug sichtbar sein; vorzugsweise die gesamte in dem Schalenelement gelagerte Reflexions-Oberfläche in der vorgegebenen Form.

Mit der vorgegebenen Form ist dabei diejenige Form gemeint, die zum Beispiel das Logo, den Schriftzug oder die Symbolfolge bildet, also der Zuschnitt des Reflektorelements. Ist die vorgegebene Form der Reflexions-Oberfläche (und damit des Reflektorelements) zum Beispiel die Form des Buchstabens "P", ist der transparente Anteil des Reflektorelements derart gestaltet und so groß, dass das P auch von außen erkennbar und sichtbar ist. Das Abdeckelement kann vorzugsweise vollständig transparent sein.

Es ergeben sich die oben genannten Vorteile.

Wie bereits oben angesprochen, kann die vorgegebene Form des Reflektorelements zum Beispiel ein Symbol sein oder eine Symbolfolge, also ein Symbol oder eine Symbolfolge bilden; beispielhaft zum Beispiel einen Buchstaben oder eine Buchstabenfolge. Die Kombination von Form und Reflexion ist besonders wirksam bei der nächtlichen Vermittlung von Informationen, da zum Beispiel eine Kennzeichnung eines Polizei-Fahrzeugs mit dem reflektierenden Schriftzug "Polizei" oder zum Beispiel ein Warnsymbol sehr viel besser erkennbar sind.

Die Form der Vertiefung des Schalenelements entspricht der vorgegebenen Form des Reflektorelements, sodass das Reflektorelement passgenau in der Vertiefung oder Mulde gelagert ist. Dies sorgt jeweils für einen besonders guten Halt. Um zusätzlich den beispielhaften Schriftzug noch mehr zu betonen, indem auch das Schalenelement durch seine Form als Informationsträger benutzt wird, kann die Form des Schalenelements der vorgegebenen Form des Reflektorelements entsprechen. Das Schalenelement gibt der ganzen Reflektorvorrichtung eine charakteristische Form, nämlich zum Beispiel die Form der beispielhaften Symbolfolge.

In einer weiteren Ausführungsform der erfindungsgemäßen Reflektorvorrichtung kann eine Form des Abdeckelements der Form des Schalenelements entsprechen. Mit anderen Worten passen Abdeckelement und Schalenelement dann deckgenau aufeinander. Dies macht die Reflektorvorrichtung besonders handlich, und gut integrierbar in oder an einem Kraftfahrzeug und erhöht einen Designaspekt.

Entsprechen die Form des Abdeckelements und die Form des Schalenelements der vorgegebenen Form des Reflektorelements, gibt die ganze Reflektorvorrichtung durch ihre charakteristische Form die beispielhaften Symbolfolge wieder. Das beispielhafte Logo oder Symbol, oder die Symbolfolge oder der Schriftzug des Reflektorelements werden dann auch tagsüber noch einmal deutlicher hervorgehoben.

Das Schalenelement weist ein Sockelelement auf, also einen Anteil, der einen Sockel bildet, in dem sich die Vertiefung oder Mulde befindet. Das Abdeckelement umgreift dann diesen Sockel mit der Vertiefung oder Mulde. Dadurch wird bei einfallendem Licht ein besonderer Tiefeneffekt der Reflexion bewirkt. Die Aufmerksamkeit eines anderen Verkehrsteilnehmers wird so noch besser auf das Reflektorelement gerichtet.

Die oben gestellte Aufgabe wird gelöst durch ein Verfahren zum Herstellen einer Reflektorvorrichtung nach einer der oben beschriebenen Ausführungsformen. Das Verfahren umfasst ein Bereitstellen des Reflektorelements, das als retroreflektierende Folie ausgestaltet ist und die vorgegebene Form hat.

Vorzugsweise können eine oder mehrere Wandung des Sockelelements die Vertiefung derart flankieren, sodass die Reflexionsoberfläche in das Sockelelement hineinversenkt ist und die Wandungen die Reflexionsoberfläche überragen. Die Wandung(en) können dann auch Flankenelement oder als Abschattungselement bezeichnet werden, das/die die Reflexionsoberfläche vor seitlich einfallendem Umgebungslicht abschattet. Einerseits kann so nachts das reflektierte Licht nur von einem eingeschränkten Blickwinkel aus gesehen werden. Zusätzlich wird die Reflexionsoberfläche tagsüber gegen seitliches Umgebungslicht geschützt, sodass eine Erosion durch Sonnenlicht, also durch UV-Strahlung, reduziert wird.

Das Verfahren umfasst außerdem das Anordnen des Schalenelements und des zumindest teilweise transparenten Abdeckelements an dem bereitgestellten Reflektorelement durch ein Spritzgussverfahren mit einem Kunststoff, also durch Spritzgießen, so dass das Schalenelement an der Rückseite des bereitgestellten Reflektorelements angeordnet ist und das Abdeckelement an dem Schalenelement, sodass die Reflexions-Oberfläche des Reflektorelements dem teilweise transparenten Abdeckelement zugewandt ist. Das Spritzgussverfahren kann vorzugsweise ein Hinterspritzen oder ein Umspritzen umfassen. Die Reihenfolge des Anordnens von Schalenelement und Abdeckelement spielt dabei keine Rolle. Das Anordnen von Schalenelement und Abdeckelement kann auch gleichzeitig erfolgen.

Vorzugsweise kann das Verfahren ein Zwei-Komponenten-Spritzgussverfahren sein. Eine bevorzugte Vorgehensweise des ZweiKomponenten-Spritzgussverfahrens kann sein, dass zuerst das Schalenelement als erste Komponente gespritzt und dann die Werkzeugoberseite entfernt wird. Danach kann das Reflektorelement, vorzugsweise eine retroreflektierende Folie, in der Vertiefung angeordnet werden, zum Beispiel aufgeklebt oder andersartig aufgebracht werden. Nach Aufbringen einer anderen (also alternativen) Werkzeugoberseite kann die Kombination von Schalenelement und Reflektorelement mit einer Klarkomponente überspritzt werden, vorzugsweise nur mit einer Klarkomponente, wobei letztere dann das Abdeckelement bildet. Unter einer Klarkomponente wird dabei ein transparenter Kunststoff verstanden. Vorteilhaft ergibt sich, dass das Reflektorelement komplett im Bauteil eingeschlossen wird und somit nicht verschmutzen kann. Im Gegensatz zu einem mehrteiligen Aufbau können Flüssigkeiten, zum Beispiel Regen oder Spritzwasser - und somit Verunreinigungen - nicht eintreten.

Die Vorteile wurden bereits oben erwähnt. Das Reflektorelement wird besonders gut vor äußerlichen Einflüssen geschützt, und die Schale ist besonders dicht.

Vorzugsweise kann das Verfahren das Anordnen der Reflektorvorrichtung in oder an einem Kraftfahrzeug, zum Beispiel das Anklipsen oder Ankleben an einem Exterieur des Kraftfahrzeugs, zum Beispiel an der Karosserie oder an dem Kühlergrill, umfassen. Das Verfahren kann dann auch als Verfahren zum Bereitstellen einer Reflektorvorrichtung an einem Kraftfahrzeug bezeichnet werden, oder als Verfahren zum Bereitstellen eines Kraftfahrzeugs.

Die oben gestellte Aufgabe wird ebenfalls gelöst durch eine Reflektorvorrichtung, die durch eine Ausführungsform des erfindungsgemäßen Verfahrens hergestellt ist. Es ergeben sich die bereits genannten Vorteile.

Die oben gestellte Aufgabe wird gelöst durch ein Kraftfahrzeug, das eine Ausführungsform der erfindungsgemäßen Reflektorvorrichtung aufweist. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Vorzugsweise kann die Reflektorvorrichtung an einem Exterieur des Kraftfahrzeugs angeordnet sein, also zum Beispiel an der Karosserie, insbesondere an einer Heckklappe, an einer Motorhaube, an einer Tür, oder an einem Kühlergrill. So können andere Verkehrsteilnehmer das Reflektorelement gut sehen und zum Beispiel frühzeitig gewarnt werden. Die Schutzfunktion des Abdeckelements kommt bei der Variante, in der die Reflektorvorrichtung am Exterieur angeordnet ist, besonders gut zu tragen, da sie das Reflektorelement vor Verschmutzung und Korrosion schützt. Vorzugsweise kann die Reflektorvorrichtung an einer Kraftfahrzeugfront angeordnet sein, insbesondere an einem Kühlergrill, und/oder an einem Kraftfahrzeugheck. An diesen Stellen wird das Reflektorelement entweder vom Gegenverkehr und/oder von nachfahrenden Fahrzeugen angestrahlt, das beispielhafte Logo oder Symbol ist durch die Reflexion also besonders gut sichtbar.

Zu der Erfindung gehören auch Weiterbildungen des erfindungsgemäßen Verfahrens und des erfindungsgemäßen Kraftfahrzeugs, die Merkmale aufweisen, wie sie bereits im Zusammenhang mit den Weiterbildungen der erfindungsgemäßen Reflektorvorrichtung beschrieben worden sind. Aus diesem Grund sind die entsprechenden Weiterbildungen des erfindungsgemäßen Verfahrens und des erfindungsgemäßen Kraftfahrzeugs hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung zu einem ersten Ausführungsbeispiel der Reflektorvorrichtung im Querschnitt;
- Fig. 2: eine weitere schematische Darstellung zu der beispielhaften Reflektorvorrichtung in einer Frontalansicht;
- Fig. 3: eine schematische dreidimensionale Darstellung der beispielhaften Reflektorvorrichtung der Fig. 2;
- Fig. 4: eine schematische Darstellung zu einem Ausführungsbeispiel des Kraftfahrzeugs mit einer Reflektorvorrichtung; und
- Fig. 5: eine schematische Darstellung zu einem Ausführungsbeispiel des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

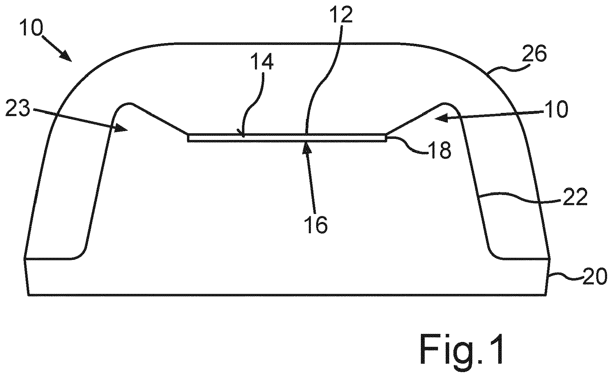

Die Fig. 1 veranschaulicht das Prinzip der erfindungsgemäßen Reflektorvorrichtung 10 in einem ersten Ausführungsbeispiel. In der Fig. 1 ist die Reflektorvorrichtung 10 dabei in einem Querschnitt gezeigt. Vorzugsweise kann die Reflektorvorrichtung 10 als Bauteil für ein Kraftfahrzeug (in der Fig. 1 nicht gezeigt) ausgestaltet sein, oder zum Beispiel als Schild oder Accessoire für eine Tasche.

Die Reflektorvorrichtung 10 der Fig. 1 weist ein Reflektorelement 12 auf, das vorzugsweise als retro-reflektierende Folie ausgestaltet sein kann. Beispielhaft kann das Reflektorelement 12 zum Beispiel verspiegelt sein, also eine Silberbeschichtung haben, oder zum Beispiel mit Glasperlen, Glaspulver und/oder Mikroprismen beschichtet sein. Geeignete Materialien für reflektierende oder retro-reflektierende Folien oder Platinen sind dem Fachmann aus dem Stand der Technik bekannt und in verschiedenen Qualitäten von verschiedenen Herstellern verfügbar. Das Reflektorelement 12 kann zum Beispiel ein Logo, einen Schriftzug oder Symbolfolge bilden, oder ein Symbol.

Das Reflektorelement 12, insbesondere ein als Folie ausgestaltetes Reflektorelement 12, kann zum Beispiel planar (also eben oder platt) sein, oder zum Beispiel einfach gebogen oder gekrümmt, doppelt gebogen oder gekrümmt, oder verdreht sein. Ein gebogenes Reflektorelement 12 kann vorzugsweise zum Beispiel entlang seiner Länge gebogen sein, und/oder ein Relief sein oder bilden.

Die der Reflexions-Oberfläche 14 entgegengesetzte Rückseite 16 kann optional ein dem Fachmann aus dem Stand der Technik bekanntes Trägermaterial sein.

Die Fig. 1 zeigt das Prinzip, dass das Reflektorelement 12 mit der Rückseite 16 in einer Vertiefung 18 liegt, die auch als "Mulde" bezeichnet werden kann. Vorzugsweise kann die Vertiefung 18 in ihrer Form der Form des Reflektorelements 12 entsprechen, sodass das Reflektorelement 12 zum Beispiel einfach in die Vertiefung 18 hineingelegt werden und dadurch gehalten werden kann. Alternativ kann das Reflektorelement 12 zum Beispiel in die Vertiefung 18 geklebt oder eingeklemmt werden. Die Vertiefung 18 wird durch das Schalenelement 20 ausgeprägt, das vorzugsweise aus einem Kunststoff gefertigt werden kann. Das Beispiel der Fig. 1 zeigt ein Schalenelement 20 mit einem Sockelelement 22, welches einen Teilkörper des Schalenelements 20 bilden kann, der die Vertiefung 18 formt. Vorzugsweise kann eine Wandung 23 des Sockelelements 22, wie in der Fig. 1 gezeigt, die Vertiefung 18 derart flankieren, sodass die Reflexionsoberfläche 14 in das Sockelelement 22 hineinversenkt ist und die Wandungen 23 die Reflexionsoberfläche 14 überragen. Die Wandungen 23 können dann auch als "Abschattungselement" bezeichnet werden, dass die Reflexionsoberfläche 14 vor seitlich einfallendem Umgebungslicht abschattet. Die Höhe der Wandung oder Wandungen 23 können dann je nach Zweck individuell vorgegeben werden.

Die Reflektorvorrichtung der Fig. 1 zeigt außerdem ein optionales Halteelement 24, zum Beispiel ein Clip zum Befestigen der Reflektorvorrichtung 10 an zum Beispiel einem Kühlergrill eines Kraftfahrzeugs.

Die Fig. 1 zeigt weiterhin das Abdeckelement 26, das vorzugsweise vollständig transparent sein kann. Der transparente Anteil des Abdeckelements 26 ist also idealerweise so groß, dass das vollständige Reflektorelement 12 bei Sicht auf das Abdeckelement 26 sichtbar ist, oder zumindest das eine Form des Reflektorelements 12 durch das Abdeckelement 26 sichtbar und erkennbar ist. Das Abdeckelement 26 kann vorzugsweise aus einem transparenten Kunststoff bestehen. Die Fig. 1, die die Variante mit einem Schalenelement 20 zeigt, das ein Sockelelement 22 hat, zeigt außerdem, dass das Abdeckelement 26 das Sockelelement 22 umgreifen kann. Das Abdeckelement 26 kann idealerweise aus einem Kunststoff bestehen oder einen solchen umfassen, der einen UV-Schutz aufweist, zum Beispiel eine aus dem Stand der Technik bekannte UV-Licht abweisende Komponente.

Idealerweise können Abdeckelement 26 und Schalenelement 20 durch ein Spritzgußverfahren geformt sein, sodass vorzugsweise das Abdeckelement 26 das Reflektorelement 12 vollständig oder nahezu vollständig bedeckt. Ein solcher luftfreier oder nahezu luftfreier Verschluss beugt einer Erosion und Verschmutzung des Reflektorelements 12 vor.

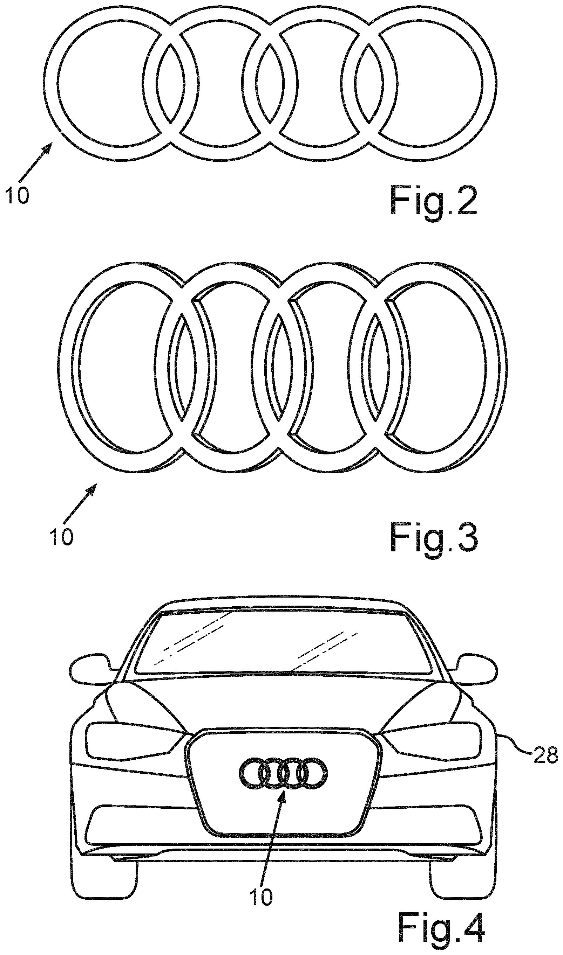

Die Fig. 2 zeigt ein bevorzugtes Ausführungsbeispiel einer Reflektorvorrichtung 10 in einer Aufsicht, in der das Reflektorelement 12 zum Beispiel die Form eines Logos hat. Aus Gründen der besseren Übersichtlichkeit sind bei dem Reflektorelement 12 der Fig. 2 die Details nicht angedeutet. In ihrem Aufbau kann die Reflektorvorrichtung 10 vorzugsweise dem Beispiel der Fig. 1 entsprechen, alternativ einer Reflektorvorrichtung 10, die kein Sockelelement 22 aufweist. Die Aufsicht der Fig. 1 veranschaulicht, dass die Reflektorvorrichtung 10 an sich vorzugsweise die gleiche Form haben kann wie das von dem Reflektorelement 12 gebildete Symbol. Dies wird in der dreidimensionalen Darstellung der Fig. 3 anschaulich dargestellt. Vorzugsweise können also Abdeckelement 26 und Schalenelement 20 ebenso in Form des Logos geformt sein. Aus Gründen der besseren Übersichtlichkeit sind Abdeckelement 26 und Schalenelement 20 in der Fig. 2 und in der Fig. 3 nicht gesondert hervorgehoben.

Die Fig. 4 zeigt ein Beispiel eines Kraftfahrzeugs 28, zum Beispiel ein Personenkraftwagen, an dem an einem Exterieur, also zum Beispiel an einem Kühlergrill, eine Reflektorvorrichtung 10 zum Beispiel angeklebt, angeklipst oder angeschraubt sein kann. Alternativ oder zusätzlich kann die Reflektorvorrichtung 10 an einem Karosserieteil und/oder an einer Heckklappe oder Kofferraumklappe angeordnet sein, oder zum Beispiel an einer Außenseite einer Tür eines Kraftfahrzeugs 28. Bei Tageslicht kann das Logo zum Beispiel durch ein als weiße Folie ausgestaltetes Reflektorelement 12 sichtbar sein, wobei die beispielhafte Folie normalerweise tagsüber nicht reflektiert, weil tagsüber üblicherweise die Scheinwerfer anderer Fahrzeuge ausgeschaltet sind.

Das Reflektorelement 12 der Fig. 4 kann zum Beispiel eine Form eines Logos haben, mit einem Reflektorelement 12 in Form des Logos. Der Aufbau kann zum Beispiel derjenige der Reflektorvorrichtung 10 der Fig. 1 und/oder der Fig. 2 und/oder Fig. 3 sein.

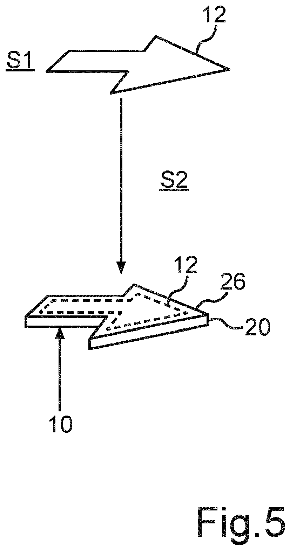

Die Fig. 5 veranschaulicht das Prinzip des Verfahrens, bei dem das Reflektorelement 12, zum Beispiel eine retro-reflektive Folie in einer vorgegebenen Form, im ersten Verfahrensschritt S1 bereitgestellt werden kann, indem das Reflektorelement 12 zum Beispiel zur Verfügung gestellt wird oder das Bereitstellen S1 kann optional die Herstellung des Reflektorelements 12 umfassen.

Im Verfahrensschritt S2 erfolgt das Anordnen des Schalenelements 20 und des zumindest teilweise transparenten Abdeckelements 26 durch ein Spritzgussverfahren, vorzugsweise aus den gleichen oder unterschiedlichen Kunststoffen. Vorzugsweise kann das Anordnen S2 durch ein Umspritzen des Reflektorelements 12 erfolgen, oder zum Beispiel zuerst durch Hinterspritzen des Reflektorelements 12 zum Anordnen des Schalenelements 20, und danach das Anordnen des Abdeckelements 26 durch Spritzgießen mit einem anderen Kunststoff.

Im Beispiel der Fig. 5 haben Reflektorelement 12 und/oder Reflektorvorrichtung 10 die Form eines Pfeils, vorzugsweise Reflektorelement 12 und Reflektorvorrichtung 10. Alternativ können Reflektorelement 12 und Reflektorvorrichtung 10 jedoch auch eine andere Form haben, zum Beispiel die Form des Logos.

Insgesamt zeigen die Beispiele, wie eine reflektive Fläche, vorzugsweise eine retro-reflektive Fläche, zum Beispiel an einem Exterieur eines Kraftfahrzeuges 28 oder an Anbauteilen in Form zum Beispiel eines Logos, Schriftzuges oder einer Symbolfolge bereitgestellt werden kann. Dabei wird ein Reflektorelement 12 vorzugsweise eine retro-reflektierende Folie in der Form des beispielhaften Logos, Schriftzuges oder Symbols oder Symbolfolge zum Beispiel ausgeschnitten und kann durch die Reflektorvorrichtung 10 am Exterieur des Kraftfahrzeugs 28 positioniert werden.

## Patentansprüche

1. Reflektorvorrichtung (10), die umfasst:
- ein Reflektorelement (12) mit einer Reflexions-Oberfläche (14), die dazu ausgestaltet ist, auf die Reflexions-Oberfläche (14) einfallende Lichtwellen zu reflektieren, und die eine vorgegebene Form hat, welche formgebend für die Reflexion ist; und mit einer der Reflexions-Oberfläche (14) gegenüberliegenden Rückseite (16), wobei das Reflektorelement (12) als retroreflektierende Folie ausgestaltet ist,
- ein Schalenelement (20), das eine Vertiefung (18) aufweist, die das Reflektorelement (12) aufnimmt, wobei das Reflektorelement (12) in der Vertiefung (18) derart gelagert ist, dass die Reflexions-Oberfläche (14) von der Vertiefung (18) abgewandt ist, , und
- ein Abdeckelement (26) mit einem transparenten Anteil, durch den die Reflexions-Oberfläche (14) des Reflektorelements (12) sichtbar ist, und wobei das Abdeckelement (26) und das Schalenelement (20) derart aneinander angeordnet sind, dass sie einen Behälter für das Reflektorelement (12) bilden, wobei
- das Abdeckelement (26) und das Schalenelement (20) durch Hinterspritzen des Reflektorelementes (12) hergestellt sind, sodass die Reflektorvorrichtung (10) keinen Spalt aufweist,
- eine Form der Vertiefung (18) des Schalenelements (20) der vorgegebenen Form des Reflektorelements (12) entspricht, sodass das Reflektorelement (12) passgenau in der Vertiefung (18) lagert ist,
- das Schalenelement (20) ein Sockelelement (22) aufweist, in dem sich die Vertiefung (18) befindet, und
- das Abdeckelement (26) das Sockelelement (22) umgreift.

2. Reflektorvorrichtung (10) nach Anspruch 1, wobei die Reflexions-Oberfläche (14) des Reflektorelements (12) die einfallenden Lichtwellen in die Einfallsrichtung der Lichtwellen zurücklenkt.

3. Reflektorvorrichtung (10) nach einem der vorhergehenden Ansprüche, wobei die vorgegebene Form des Reflektorelements (12) ein Symbol oder eine Symbolfolge bildet, oder einen Buchstaben oder eine Buchstabenfolge.

4. Reflektorvorrichtung (10) nach einem der vorhergehenden Ansprüche, wobei eine Form des Schalenelements (20) der vorgegebenen Form des Reflektorelements (12) entspricht.

5. Reflektorvorrichtung (10) nach einem der vorhergehenden Ansprüche, wobei eine Form des Abdeckelements (26) der Form des Schalenelements (20) entspricht.

6. Reflektorvorrichtung (10) nach einem der vorhergehenden Ansprüche, wobei die Form des Abdeckelements (26) und die Form des Schalenelements (20) der vorgegebenen Form des Reflektorelements (12) entsprechen.

7. Reflektorvorrichtung (10) nach einem der vorhergehenden Ansprüche, wobei das Abdeckelement (26) aus einem Kunststoff besteht, der eine UV-Licht abweisende Komponente umfasst.

8. Verfahren zum Herstellen einer Reflektorvorrichtung (10) nach einem der vorhergehenden Ansprüche, umfassend die Schritte:
- Bereitstellen des Reflektorelements (12), das als retroreflektierende Folie ausgestaltet ist und das eine vorgegebene Form hat (S1),
- Anordnen des Schalenelements (20) und des zumindest teilweise transparenten Abdeckelements (26) an dem bereitgestellten Reflektorelement (12) durch Spritzgießen, sodass das Schalenelement (20) an der Rückseite (16) des bereitgestellten Reflektorelements (12) angeordnet ist, und das Abdeckelement (26) an dem Schalenelement (20), sodass die Reflexions-Oberfläche (14) des Reflektorelements (12) dem teilweise transparenten Abdeckelement (26) zugewandt ist (12, S2).

9. Verfahren nach Anspruch 8, das ein Zwei-Komponenten-Spritzgussverfahren ist; wobei:
- das Anordnen des Schalenelements (20) durch Spritzen des Schalenelements (20) als erste Komponente erfolgt;
- nach dem Spritzen des Schalenelements (20) ein Entfernen einer Werkzeugoberseite erfolgt;
- nach dem Entfernen der Werkzeugoberseite das Anordnen des Reflektorelements (12) in der Vertiefung (18),
- Aufbringen einer weiteren Werkzeugoberseite erfolgt;
- nach dem Aufbringen einer weiteren Werkzeugoberseite ein Überspritzen von Schalenelement (20) und Reflektorelement (12) mit einer Klarkomponente zum Bilden des Abdeckelements (26) erfolgt.

10. Kraftfahrzeug (28) mit einer Reflektorvorrichtung (10) nach einem der Ansprüche 1 bis 7.

11. Kraftfahrzeug (28) nach Anspruch 10, wobei die Reflektorvorrichtung (10) an einem Exterieur des Kraftfahrzeugs (28) angeordnet ist.

## Claims

1. A reflector device (10) comprising:
- a reflector element (12) having a reflection surface (14), which is configured to reflect light waves incident on the reflection surface (14), and which has a preset shape, which is form-giving for the reflection; and having a rear side (16) opposing the reflection surface (14), wherein the reflector element (12) is configured as a retroreflective film,
- a shell element (20) having a depression (18), which accommodates the reflector element (12), wherein the reflector element (12) is mounted in the depression (18) such that the reflection surface (14) faces away from the depression (18), and
- a covering element (26) having a transparent portion, through which the reflection surface (14) of the reflector element (12) is visible, and wherein the covering element (26) and the shell element (20) are arranged on each other such that they form a container for the reflector element (12), wherein
- the covering element (26) and the shell element (20) are produced by back-molding the reflector element (12), such that the reflector device (10) does not have a gap,
- a shape of the depression (18) of the shell element (20) corresponds to the preset shape of the reflector element (12), such that the reflector element (12) is mounted in the depression (18) in a precise fit,
- the shell element (20) has a base element (22), in which the depression (18) is located, and
- the covering element (26) surrounds the base element (22).

2. The reflector device (10) according to claim 1, wherein the reflection surface (14) of the reflector element (12) deflects the incident light waves back in the direction of incidence of the light waves.

3. The reflector device (10) according to any one of the preceding claims, wherein the preset shape of the reflector element (12) forms a symbol or a symbol sequence or a letter or a letter sequence.

4. The reflector device (10) according to any one of the preceding claims, wherein a shape of the shell element (20) corresponds to the preset shape of the reflector element (12).

5. The reflector device (10) according to any one of the preceding claims, wherein a shape of the covering element (26) corresponds to the shape of the shell element (20).

6. The reflector device (10) according to any one of the preceding claims, wherein the shape of the covering element (26) and the shape of the shell element (20) correspond to the preset shape of the reflector element (12).

7. The reflector device (10) according to any one of the preceding claims, wherein the covering element (26) consists of a plastic comprising a UV-light-repellent component.

8. A method for producing a reflector device (10) according to any one of the preceding claims, comprising the steps of:
- providing the reflector element (12), which is configured as a retroreflective film and which has a preset shape (S1),
- arranging the shell element (20) and the at least partially transparent covering element (26) on the provided reflector element (12) by injection molding, such that the shell element (20) is arranged on the rear side (16) of the provided reflector element (12), and the covering element (26) is arranged on the shell element (20), such that the reflection surface (14) of the reflector element (12) faces the partially transparent covering element (26) (12, S2).

9. The method according to claim 8, which is a two-component injection molding method, wherein:
- arranging the shell element (20) by injection molding the shell element (20) as the first component takes place;
- after injection molding of the shell element (20), removing a mold top side takes place;
- after removal of the mold top side, arranging the reflector element (12) in the depression (18);
- applying another mold top side takes place;
- after the application of another mold top side, overmolding of shell element (20) and reflector element (12) with a clear component to form the covering element (26) takes place.

10. A motor vehicle (28) having a reflector device (10) according to any one of claims 1 to 7.

11. The motor vehicle (28) according to claim 10, wherein the reflector device (10) is arranged on an exterior of the motor vehicle (28).

## Revendications

1. Dispositif réflecteur (10) comprenant :
- un élément réflecteur (12) ayant une surface de réflexion (14) qui est conçue pour réfléchir des ondes lumineuses incidentes sur la surface de réflexion (14) et a une forme prédéterminée qui est façonnée pour la réflexion ; et comportant un côté arrière (16) opposé à la surface de réflexion (14), l'élément de réflexion (12) étant conçu comme un film rétroréfléchissant,
- un élément de coque (20) comportant un évidement (18) qui reçoit l'élément réflecteur (12), l'élément réflecteur (12) étant monté dans l'évidement (18) de telle sorte que la surface de réflexion (14) fait face à l'évidement (18), et
- un élément de recouvrement (26) ayant une partie transparente à travers laquelle la surface de réflexion (14) de l'élément réflecteur (12) est visible, et l'élément de recouvrement (26) et l'élément de coque (20) étant agencés l'un sur l'autre de telle sorte qu'ils forment un contenant pour l'élément réflecteur (12),
- l'élément de recouvrement (26) et l'élément de coque (20) étant fabriqués par injection arrière de l'élément réflecteur (12) de sorte que le dispositif réflecteur (10) ne comporte aucun interstice,
- une forme de l'évidement (18) de l'élément de coque (20) correspondant à la forme prédéterminée de l'élément réflecteur (12), de sorte que l'élément réflecteur (12) est monté précisément dans l'évidement (18),
- l'élément de coque (20) comportant un élément de socle (22) dans lequel se trouve l'évidement (18), et
- l'élément de recouvrement (26) entourant l'élément de socle (22).

2. Dispositif réflecteur (10) selon la revendication 1, dans lequel la surface de réflexion (14) de l'élément réflecteur (12) redirige les ondes lumineuses incidentes dans la direction d'incidence des ondes lumineuses.

3. Dispositif réflecteur (10) selon l'une des revendications précédentes, dans lequel la forme prédéterminée de l'élément réflecteur (12) forme un symbole ou une série de symboles, ou une lettre ou une série de lettres.

4. Dispositif réflecteur (10) selon l'une des revendications précédentes, dans lequel une forme de l'élément de coque (20) correspond à la forme prédéterminée de l'élément réflecteur (12).

5. Dispositif réflecteur (10) selon l'une des revendications précédentes, dans lequel une forme de l'élément de recouvrement (26) correspond à la forme de l'élément de coque (20).

6. Dispositif réflecteur (10) selon l'une des revendications précédentes, dans lequel la forme de l'élément de recouvrement (26) et la forme de l'élément de coque (20) correspondent à la forme prédéterminée de l'élément réflecteur (12).

7. Dispositif réflecteur (10) selon l'une des revendications précédentes, dans lequel l'élément de recouvrement (26) est constitué d'une matière plastique qui comprend un composant ne laissant pas passer la lumière UV.

8. Procédé de fabrication d'un dispositif réflecteur (10) selon l'une des revendications précédentes, comprenant les étapes de :
- fournir l'élément réflecteur (12) qui est conçu comme un film rétroréfléchissant et a une forme prédéterminée (S1),
- agencer l'élément de coque (20) et l'élément de recouvrement (26) au moins partiellement transparent sur l'élément réflecteur (12) fourni par un moulage par injection, de sorte que l'élément de coque (20) est agencé sur le côté arrière (16) de l'élément réflecteur (12) fourni, et l'élément de recouvrement (26) sur l'élément de coque (20), de sorte que la surface de réflexion (14) de l'élément réflecteur (12) est dirigée vers l'élément de recouvrement (26) partiellement transparent (S2).

9. Procédé selon la revendication 8, qui est un procédé de moulage par injection à deux composants, dans lequel :
- l'élément de coque (20) est agencé en injectant l'élément de coque (20) en tant que premier composant ;
- après l'injection de l'élément de coque (20), une partie de moule supérieure est retirée ;
- après le retrait de la partie de moule supérieure, l'élément réflecteur (12) est agencé dans l'évidement (18) ;
- une autre partie de moule supérieure est appliquée ;
- après l'application d'une autre partie de moule supérieure, l'élément de coque (20) et l'élément réflecteur (12) sont injectés avec un composant transparent pour former l'élément de recouvrement (26).

10. Véhicule à moteur (28) ayant un dispositif réflecteur (10) selon l'une des revendications 1 à 7.

11. Véhicule à moteur (28) selon la revendication 10, dans lequel le dispositif réflecteur (10) est agencé sur un extérieur du véhicule à moteur (28).
